## Europäisches Patentamt

## European Patent Office

## Office européen des brevets

(1) Publication number: **0 106 611**
**B1**

(12) **EUROPEAN PATENT SPECIFICATION**

(45) Date of publication of patent specification: **23.12.87**

(51) Int. Cl.⁴: **B 60 J 7/04**

(21) Application number: **83305948.8**

(22) Date of filing: **03.10.83**

(54) **Sliding roof for motor vehicles.**

(30) Priority: **12.10.82 GB 8229111**

(43) Date of publication of application:
**25.04.84 Bulletin 84/17**

(45) Publication of the grant of the patent:
**23.12.87 Bulletin 87/52**

(84) Designated Contracting States:
**DE FR GB**

(56) References cited:
**DE-A-2 936 051**
**FR-A-2 467 094**
**GB-A-1 523 538**

(73) Proprietor: **Britax Weathershields Limited**
**180 Sherlock Street**
**Birmingham B5 7EH (GB)**

(72) Inventor: **Morgan, Geoffrey Charles**
**74 Cotton Lane Moseley**
**Birmingham West Midlands B13 9SE (GB)**
Inventor: **Williams Phillip John**
**Tile House Main Street Watford Village**
**Long Buckley Northampshire NN6 7UY (GB)**

(74) Representative: **Hollinghurst, Antony**
**Britax Limited Patent Department Kingsham**
**Road**
**Chichester West Sussex PO19 2UG (GB)**

## Description

This invention relates to a sliding roof assembly for motor vehicle of the type comprising a rigid roof panel which is supported at each side by front and rear guide means on respective guide tracks extending along each side of an opening in the vehicle roof and behind said opening below the vehicle roof, together with means for moving the rear guide means along the guide tracks, the front guide means being adapted to permit pivotal movement of the panel about a horizontal axis at right-angles to the guide tracks and each rear guide means comprising a guide shoe slidably received in the corresponding guide track, whereby the roof can be opened either by sliding the panel below the vehicle roof behind the opening or by pivoting the panel upwardly about said transverse horizontal axis.

A sliding roof assembly of this type is disclosed in Patent Specification GB—A—1523538 but the mechanism disclosed involves a complex arrangement of slide guides and cam followers. The present invention is concerned with the provision of a simple mechanism for an opening roof of this type.

DE—A—2936051 discloses a sliding roof assembly which can be opened only by sliding the panel below the vehicle roof behind the opening and which comprises a rigid roof panel which is supported at each side by front and rear guide means on respective guide tracks extending along each side of an opening in the vehicle roof and behind said opening below the vehicle roof. Each rear guide means comprises a guide shoe which is slidably received in the corresponding guide track and a single link having one end pivotally connected to the panel and pivotally connected at the other end to the guide shoe.

According to the invention, in a sliding roof assembly of the foregoing type, each guide shoe is connected to the roof panel by a chain of at least two links, each of the connections at the ends of the chain and between djacent links thereof being arranged to permit relative angular movement over a limited range between an orientation such that adjacent links are in line with each other and parallel to the guide rail and an orientation such that adjacent links are at obtuse angles to each other and project above the guide rail.

Preferably the length of the link connected to the roof panel is chosen so that, when said link has pivoted to said obtuse angle relative to the next adjacent link which has remained parallel to the guide rail, the rear edge of the roof panel is level with the adjacent vehicle roof.

In one form of the invention, the chain links have formations adapted to engage with the guide track so as to inhibit movement thereof out of line with one another when any part of the roof panel is under the vehicle roof behind the opening.

The front guide shoes may include formations adapted to engage with complementary formations on the track so as to inhibit a rearward movement of the front guide means except when the rigid roof panel is at the angle to the guide rails which it adopts when all the chain links are in line with one another.

Embodiments of the invention will now be described, by way of example, with reference to the accompanying drawings, in which:

Figure 1 is a fragmentary perspective sectional view of a motor car fitted with a sliding roof assembly of the type to which the invention relates, showing the roof panel in its closed position and each of its two alternative open positions;

Figure 2 is a cross-sectional view of a guide rail extending along the side of the roof opening;

Figure 3 is a fragmentary longitudinal sectional view through one of the guide tracks of the roof illustrated in Figure 1, showing the rear edge of the roof in closed position;

Figure 4 is a fragmentary cross-sectional view, taken in the same plane as that shown in Figure 1 but showing the front edge of the panel;

Figure 5 is a fragmentary cross-sectional view, corresponding to Figure 3 but showing the rear edge of the roof after partial sliding rearwardly below the vehicle roof;

Figure 6 is a fragmentary cross-sectional view, corresponding to Figure 4 but showing the roof after its rear edge has been lowered prior to sliding rearwardly below the vehicle roof;

Figure 7 and 8 are fragmentary cross-sectional views, corresponding to Figures 3 and 4 but showing the roof panel in its upwardly pivoted position;

Figure 9 is a perspective view of part of the drive mechanism for the roof shown in Figure 3; and

Figures 10 and 11 are perspective views of alternative forms of drive mechanisms to that illustrated in Figure 9.

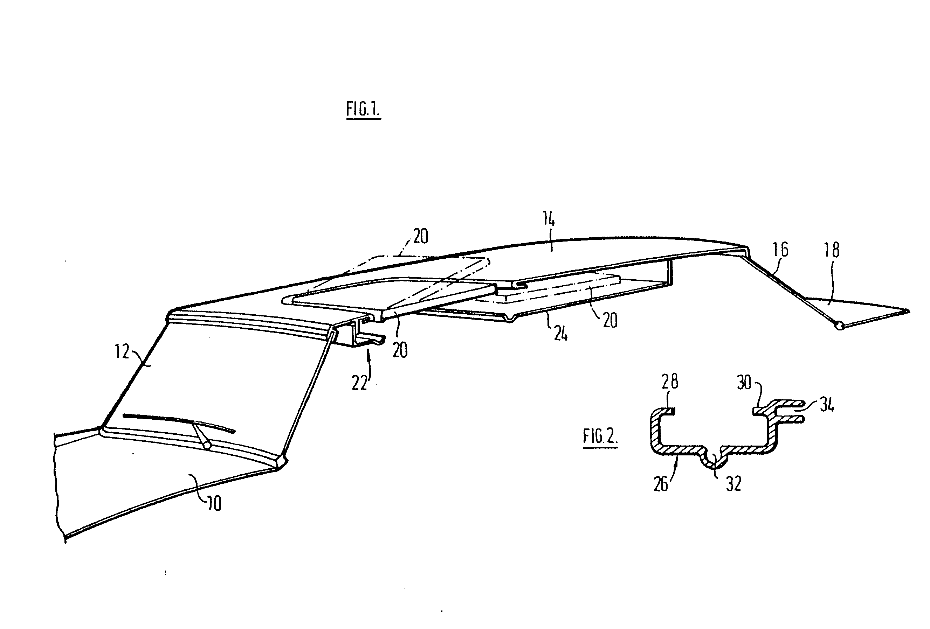

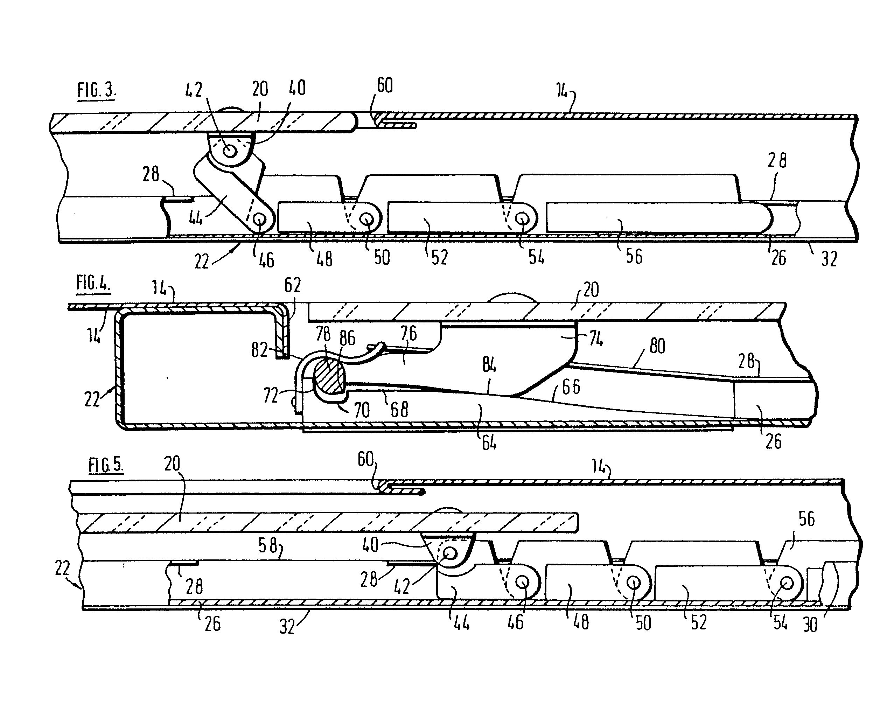

Figure 1 shows the upper part of the body of a saloon motor car comprising a bonnet 10, a windscreen 12, a roof 14, a rear window 16 and a boot 18. A moveable glass roof panel 20 is located in a frame 22 bounding an opening in the vehicle roof 14 and including a drain tray 24 forming the bottom of a chamber into which the roof panel 20 can be slid below the vehicle roof 14.

A respective guide track, on which the panel 20 is slideable, extends along each side of the opening in the vehicle roof 14 and into the space above the drain tray 24. Figure 2 shows the track 26 on the car driver's right-hand side of the opening in the vehicle roof 14, in transverse cross-section. The track 26 consists of a generally U-shaped channel with the tops of the side limbs turned inwardly to form shoulders 28 and 30, and with a groove 32 of almost completely circular cross-section in the bottom. On the side facing inwardly towards the roof opening, the guide channel 26 includes a laterally facing slot 34 for accommodating a sun-blind (not shown) which can slide below the glass panel 20.

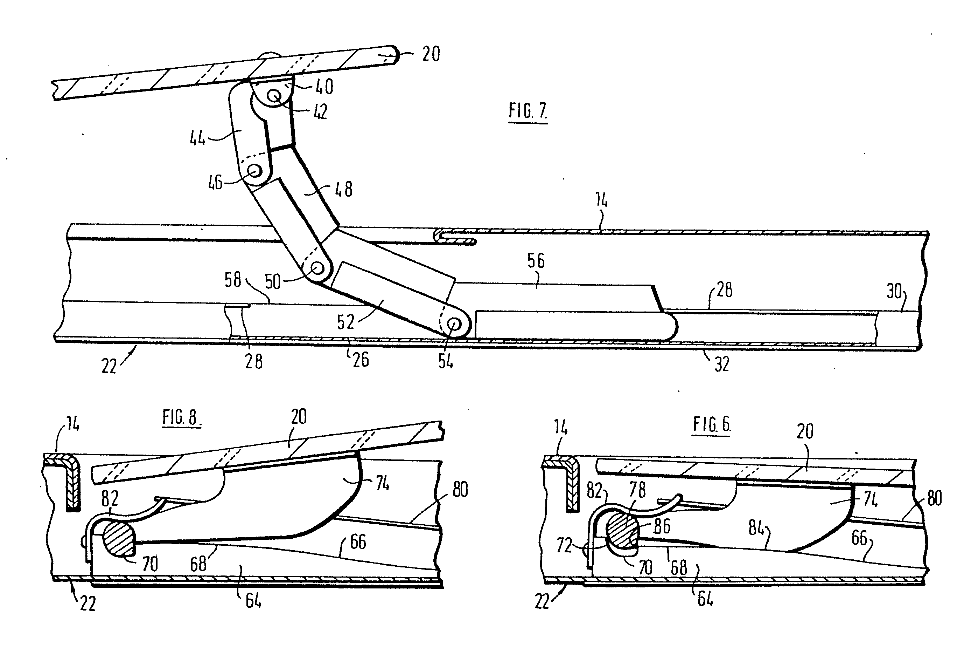

Turning now to Figure 3, the panel 20 is supported at its right-hand rear corner by a bracket 40 secured to its undersurface. The bracket 40 is pivotally connected, by a pivot pin 42 to a link 44 which, in turn is pivotally connected by a pin 46 to a second link 48. The second link 48 is pivotally connected by a pin 50 to a third link 52 which is pivotally connected by a pin 54 to a slider 56. The various links 44, 48 and 52 and the slider 56 are of inverted T-shaped cross-section, having the cross-bar engaging in the channel under the shoulders 28 and 30 with the stem projecting upwardly therebetween. As can be seen, the pivot joints between the links 44, 48 and 52 and the slider 56 are constructed to permit angular movement upwardly from the horizontal over a range of about 45°. As can best be seen from Figure 5, the shoulder 28 is cut-away over a zone 58 just in front of the rear edge 60 of the opening in the vehicle roof 14, and the shoulder 30 is similarly cut-away, to allow the cross-bars of the T-shapes of the links 44, 48 and 52 to move upwardly through this zone out of engagement with the bottom of the track 26. The slider 56 is coupled to a drive cable (not shown) which is accommodated in the groove 32 and which can be used to propel the slider 56 along the track 26.

Figure 4 shows the front end of the track 26 and the front edge 62 of the opening in the vehicle roof 14. The shoulders 28 and 30 are cut-away so as to permit the track 26 to accommodate a ramp insert 64, the top surface of which has a sloping portion 66 extending upwardly from the bottom of the track 26 and leading into a horizontal portion 68 having a recess 70 at its front end. The front wall of the recess 70 is extended upwardly above the level of the horizontal surface 68 to provide an abutment 72. A bracket 74 is secured to the underside of the panel 20 adjacent to the front right-hand corner thereof. The bracket 74 is of substantially the same width as the stems of the T-shapes of the links 44, 48 and 52, i.e. less than the width between the shoulders 28 and 30 on the track 26, and has a forwardly projecting portion 76 spaced from the undersurface of the panel 20 and carrying, on its front end, a transverse cylindrical formation 78, the same width as the cross-bars of the T-shapes of the links 47, 48 and 52.

A shoulder 80 extends from the front end of the shoulder 28 parallel to the ramp 66 and terminates just before the recess 70. A similar shoulder (not shown) extends from the front end of the shoulder 30 on the other side of the track. A spring member 82 secured to the front edge of the ramp member 64 extends backwardly between the ends of the shoulder 80 and the corresponding shoulder leading from the shoulder 30 of the track 26.

Corresponding mechanisms to those shown in Figures 3 and 4 are provided for supporting the left-hand side of the panel 20.

When the panel 20 is in the closed position level with the vehicle roof 14, the first link 44 is inclined at its maximum angle to the adjacent link 48 which is in line with the link 52 and the slider 56.

At the front end of the roof, the bracket 74 is located with its cylindrical formation 78 in contact with the abutment 72 but held clear of the bottom of the recess by a cam surface 84 formed by the bottom edge of the bracket 74, so as to abut against the top of the sloping portion 66 of the ramp member 64. In this position, a shoulder 86 formed on the cylindrical formation 78, engages with the edge of the recess 70 so as to prevent backward movement of the panel 20 into contact with the rear edge 60 of the opening in the vehicle roof 14. The assembly is held in this position by the drive cables which prevent backward movement of the slider 56 and the corresponding slider on the other side of the roof.

When the panel 20 is to be slid into the void between the vehicle roof 14 and the drain tray 24, the slider 56 is moved backwards to the position shown in Figure 5. Initially, engagement of the abutment 86 with the rear edge of the cylindrical recess 70 prevents backward movement of the panel 20, with the result that the first link 44 pivots downwards into abutment with the bottom of the track 26. The resulting downward movement of the rear edge of the panel 20 causes pivotal movement on the cam surface 84 (Figure 4), with the result that the abutment 86 is lifted out of engagement with the rear edge of the cylindrical recess 70, flexing the spring 82. The rear edge of the panel 20 is now below the rear edge 60 of the opening in the vehicle roof 14. Continued backward movement of the slider 56 causes the panel 20 to slide backwards, the cylindrical portion 78 of the bracket 74 coming into engagement with the horizontal part 68 of the ramp insert 64 as the cam surface 84 disengages from the sloping part 66 thereof. The cylindrical portion 78 is guided into the track by the shoulder 80 and the corresponding shoulder on the other side thereof. The first link 44 has by now moved clear of the cutaway zone 58 and under the shoulders 28 and 30 of the track so that upward movement of the rear edge of the panel 20 is prevented. The panel 20 can then be slid rearwardly to the maximum extent to the position, illustrated in chain-dotted lines in Figure 1, between the vehicle roof 14 and the drain tray 24.

When the roof is to be closed again, the slider 56 is moved forward by the drive cables, the cylindrical, portion 78 sliding up the ramp 64 under the upturned end of the spring 82 and into engagement with the abutment 72. Continued forward movement of the slider 56 causes the first link 44 to pivot upwardly through the cut-away zone 58 to return the panel 20 to its position level with the vehicle roof 14, as shown in Figures 3 and 4.

If the slider 56 is moved further forwards by the drive cables, the link 48 starts pivoting about the pin 50, forward movement of the panel 20 being prevented by the engagement of the cylindrical portion 78 of the bracket 74 with the abutment 72 at the front of the panel. The cylindrical member 78 moves to the bottom of the recess 70 and subsequent upward pivotal movement of the panel 20 takes place about this recess, the cam surface 84 separating from the ramp 64.

At the rear of the panel 20, pivotal movement of the link 48 about the pin 50 continues as the slider 56 moves forwards until the maximum permitted pivotal movement has taken place. The next link 52 is now aligned with the cut-away zone 58 and consequently pivotal movement about the pin 54 can take place until the link 52 is at the maximum permitted angle to the slider 56 whe the panel 20 is in the fully upwardly pivoted position also illustrated in chain-dotted lines in Figure 1. The panel 20 can be moved back to its closed position by moving the slider 56 back to the position shown in Figure 3.

The lengths of the links 44, 48 and 52 and the location of the cut-away portion 58 are chosen so that each link becomes free to move upwards only when the previous link has pivoted to its maximum extent.

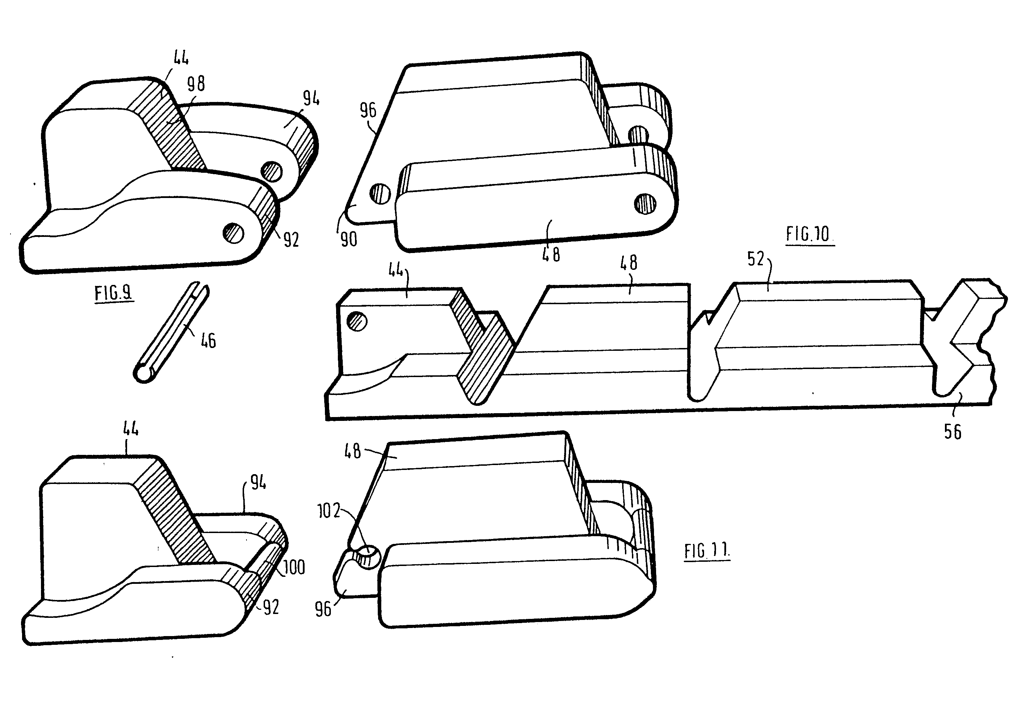

Figure 9 illustrates the links 44 and 48 in more detail. The link 48 has a tongue 90 which is received between shoulders 92 and 94 on the link 44. The tongue 90 has an inclined abutment surface 96 which engages with a corresponding surface 98 on the link 44 to limit the maximum angle of pivotal movement about the pin 46 which can conveniently take the form of a longitudinally slip spring pin. The various links may be formed as plastic mouldings.

Figure 10 illustrates an alternative arrangement in which the links 44, 48 and 52 and the slider 56 are formed as a single plastics moulding of a material such as polypropylene with integral hinges replacing the various hinge pins.

Figure 11 illustrates a third alternative in which the hinge pin 46 is replaced by a cylindrical member 100 moulded integrally with the link 44 and extending between the two shoulders 92 and 94. The tongue 96 of the link 48 is formed with a suitably shaped slot 102 which can snap over the cylindrical portion 100 as the links are assembled together. The other pivot joints are then formed in a similar manner.

**Claims**

1. A sliding roof assembly for motor vehicle comprising a rigid roof panel (20) which is supported at each side by front and rear guide means on reapective guide tracks (26) extending along each side of an opening in the vehicle roof (14) and behind said opening below the vehicle roof (14), together with means for moving the rear guide means (56) along the guide tracks (26), the front guide means (74) being adapted to permit pivotal movement of the panel (20) about a horizontal axis at right-angles to the guide tracks (26) and each rear guide means comprising a guide shoe (56) slidably received in the corresponding guide track (26), whereby the roof can be opened either by sliding the panel below the vehicle roof behind the opening or by pivoting the panel upwardly about said transverse horizontal axis, characterised in that each guide shoe (56) is connected to the roof panel by a chain of at least two links (44, 48, 52), each of the connections (42, 46, 50, 54) at the ends of the chain and between adjacent links (44, 48, 52) thereof being arranged to permit relative angular movement over a limited range between an orientation such that adjacent links (44, 48, 52) are in line with each other and parallel to the guide track (26) and an orientation such that adjacent links (44, 48, 52) are at obtuse angles to each other and project above the guide track (26).

2. A roof assembly according to claim 1, characterised in that the length of the link (44) connected to the roof panel (20) is such that, when said link (44) has pivoted to said obtuse angle relative to the next adjacent link (48) which has remained parallel to the gide track (26), the rear edge of the roof panel (20) is level with the adjacent vehicle roof (14).

3. A roof assembly according to claim 1 or 2, characterised in that the chain links (44, 48, 52) have formations adapted to engage with the guide track (26) so as to inhibit movement thereof out of line with one another when any part of the roof panel (20) is under the vehicle roof (14) behind the opening.

4. A roof assembly according to claim 3, characterised in that chain link is of such length that the formations thereof disengage from the track (26) as the next link nearer to the roof panel (20) reaches said obtuse angle relative thereto.

5. A roof assembly according to claim 3 or 4, characterised in that the chain links (44, 48, 52) are of inverted T-shaped transverse cross-sections, the cross-bars of the T-shape engaging under shoulders (28, 30) formed on the track (26).

6. A roof assembly according to claim 5, characterised in that the end faces of the stems of the T-shapes at each of the links (44, 48, 52) are arranged to abut against the corresponding movement to said obtuse angle.

7. A roof assembly according to claim 5 or 6, characterised in that the chain links (44, 48, 52) and the guide shoe (56) are formed as a one-piece moulding with integrally moulded hinge formations therebetween.

8. A roof assembly according to claim 4 or 5, characterised in that each link (44, 48, 52) is formed with an integrally moulded hinge pin (100) at one end and a slot (102) at the other end, the slot (102) having an enlarged inner end engaged to snap round the pin (100) of the next adjacent link.

9. A roof assembly according to any preceding claim, characterised in that the front guide means comprises support means (74) secured to the underside of the panel (20) adjacent to each of the front corners thereof and carrying a formation (78) adapted to engage with a complementary formation (70) on the track (26) which inhibits rearward movement of the panel (20) except when the rear edge thereof is in its fully lowered position below the vehicle roof (14).

## Patentansprüche

1. Schiebedachanordnung für ein Kraftfahrzeug, umfassend eine starre Dachpanele (20), die an jeder Seite durch eine vordere und eine hintere Führungseinrichtung auf zugehörigen Führungsspuren (26) gelagert ist, welche sich entlang jeweils einer Seite einer Öffnung in dem Fahrzeugdach (14) sowie hinter der Öffnung unterhalb des Fahrzeugdachs (14) erstrecken, zusammen mit Mitteln zum Bewegen der hinteren Führungseinrichtung (56) entlang der Führungsspuren (26), wobei die vordere Führungseinrichtung (74) derart ausgebildet ist, daß sie eine Schwenkbewegung der Panele (20) um eine horizontale Achse, die zu den Führungsspuren (26) rechte Winkel bildet, gestattet, und jede hintere Führungseinrichtung einen Führungsschuh (56) aufweist, der verschieblich in der entsprechenden Führungsspur (26) aufgenommen ist, wodurch das Dach entweder dadurch geöffnet werden kann, daß die Panele unter das Fahrzeugdach hinter der Öffnung geschoben wird, oder dadurch, daß die Panele um die horizontale Querachse verschwenkt wird, dadurch gekennzeichnet, daß jeder Führungsschuh (56) mit der Dachpanele über eine Kette aus mindestens zwei Gliedern (44, 48, 52) verbunden ist, wobei jede der Verbindungen (42, 46, 50, 54) an den Enden der Kette und zwischen benachbarten Gliedern (44, 48, 52) der Kette so angeordnet ist, daß eine Relativ-Winkelbewegung in einem begrenzten Bereich möglich ist swischen einer Orientierung, gemäß der benachbarte Glieder (44, 48, 52) miteinander in einer Linie liegen und parallel zu der Führungsspur (26) verlaufen, und einer Orientierung, gemäß der banachbarte Glieder (44, 48, 52) zueinander in stumpfen Winkeln angeordnet sind und oberhalb der Führungsspur (26) vorstehen.

2. Dachanordnung nach Anspruch 1, dadurch gekennzeichnet, daß die Länge des mit der Dachpanele (20) verbundenen Gliedes (44) so bemessen ist, daß wenn das Glied (44) zu dem stumpfen Winkel bezüglich des beanchbarten Glieds (48), das parallel zu der Führungsspur (26) verblieben ist, verschwenkt ist, die hintere Kante der Dachpannele (20) in einer Höhe mit dem benachbarten Fahrzeugdach (14) liegt.

3. Dachanordnung nach Anspruch 1 oder 2, dadurch gekennzeichnet, daß die Kettenglieder (44, 48, 52) Formungen aufweisen, die mit der Führungsspur (26) derart in Eingriff bringbar sind, daß ihre Bewegung aus der ihnen gemeinsamen Linie verhindert wird, wenn irgendein Teil der Dachpanele (20) sich unterhalb des Fahrzeugdachs (14) hinter der Öffnung befindet.

4. Dachanordnung nach Anspruch 3, dadurch gekennzeichnet, daß das Kettenglied eine solche Länge hat, daß seine Formungen von der Spur (26) loskommen, wenn das nächste, der Dachpanele (20) näherliegende Glied ihm gegenüber den stumpfen Winkel erreicht.

5. Dachanordnung nach Anspruch 3 oder 4, dadurch gekennzeichnet, daß die Kettenglieder (44, 48, 52) von umgedrehten, T-förmigen querverlaufenden Querschnitt sind, wobei die Querstege der T-Form unter an der Spur (26) gebildeten Schultern (28, 30) greifen.

6. Dachanordnung nach Anspruch 5, dadurch gekennzeichnet, daß die Stirnseiten der Stile der T-Formen jedes Glieds (44, 48, 52) derart ausgebildet sind, daß sie bei der entsprechenden Bewegung zu dem stumpfen Winkel gegeneinanderstoßen.

7. Dachanordnung nach Anspruch 5 oder 6, dadurch gekennzeichnet, daß die Kettenglieder (44, 48, 52) un der Führungsschuh (56) jeweils als einstückiges Formteil mit dazwischenliegenden, einstückig angeformten Scharnierteilen ausgebildet sind.

8. Dachanordnung nach Anspruch 4 oder 5, dadurch gekennzeichnet, daß jedes Glied (44, 48, 52) mit einem einstückig angeformten Scharnierstift (100) an einem Ende und einem Schlitz (102) am anderen Ende ausgebildet ist, wobei der Schlitz (102) ein vergrößertes inneres Ende aufweist, welches um den Stift (100) des benachbarten Glied schanppt.

9. Dachanordnung nach irgendeinem der vorhergehenden Ansprüche, dadurch gekennzeichnet, daß die vordere Führungseinrichtung eine an der Unterseite der Panele (20) benachbart zu jeweils einer vorderen Ecke der Panele befestigte Lageranordnung (74) aufweist, die eine Formung (78) trägt, welche mit einer komplementären Formung (70) an der Spur (26) in Eingriff gelangt, wodurch eine Rückwärtsbewegung der Panele (20) verhindert wird, ausgenommen dann, wenn die hintere Kante der Panele sich in ihrer vollständig unter das Fahrzeugdach (14) abgesenkten Lage befindet.

## Revendications

1. Un ensemble de toit ouvrant pour un véhicule automobile comprenant un panneau de toit rigide (20) qui est supporté de chaque côté par des moyens de guidage avant et arrière sur des rails de guidage respectifs (26) s'étendant le long de chaque côté d'une ouverture ménagée dans le toit du véhicule (14) et derrière ladite ouverture sous le toit du véhicule (14), coopérant avec des moyens pour déplacer les moyens de guidage arrière (56) le long des rails de guidage (26), les moyens de guidage avant (74) étant adaptés pour permettre un mouvement de pivotement du panneau (20) autour d'un axe horizontal, perpendiculairement aux rails de guidage (26), chaque moyen de guidage arrière comportant un patin de guidage (56) monté de façon coulissante dans le rail de guidage correspondant (26), dans lequel le toit peut être ouvert soit en faisant coulisser le panneau sous le toit du véhicule derrière l'ouverture, soit en faisant pivoter le panneau vers le haut autour dudit axe horizontal transversal, caractérisé en ce que chaque patin de guidage (56) est relié au panneau de toit par une chaîne d'au moins deux chaînons articulés (44, 48, 52), chacun des axes de liaison (42, 46, 50, 54) aux extrémités de la chaîne et entre les chaînons adjacents (44, 48, 52) de celle-ci étant disposés de manière à permettre le mouvement angulaire relatif d'une étendue limitée entre une orientation telle que les chaînons adjacents (44, 48, 52) sont alignés les uns par rapport aux autres et parallèles au rail de guidage (26) et une orientation telle que les chaînons adjacents (44, 48, 52) font des angles obtus les uns par rapport aux autres et font saillie au-dessus du rail de guidage (26).

2. Un ensemble de toit ouvrant selon la revendication 1, caractérisé en ce que la longueur de chaînon (44) relié au panneau de toit (20) est telle que, lorsque ledit chaînon (44) a pivoté vers ledit angle obtus par rapport au chaînon adjacent voisin (48) qi est resté parallèle au rail de guidage (26), le bord arrière du panneau de toit (20) est à niveau avec le toit du vèhicule adjacent (14).

3. Un ensemble de toit ouvrant selon la revendication 1 ou 2, caractérisé en ce que les chaînons (44, 48, 52) de la chaîne sont des éléments destinés à venir en prise avec le rail de guidage (26) de manière à empêcher celui-ci de se déplacer pour se désaligner par rapport à un autre lorsqu'une partie quelconque du panneau de toit (20) est sous le toit du vèhicule (14) derrière l'ouverture.

4. Un ensemble de toit ouvrant selon la revendication 3 caractérisé en ce que la longueur d'un chaînon est telle que les éléments de la chaîne se dégagent du rail (26) lorsque le chaînon voisin le plus près du panneau de toit (20) atteint ledit angle obtus par rapport à celui-ci.

5. Un ensemble de toit ouvrant selon la revendication 3 ou 4, caractérisé en ce que les chaînons (44, 48, 52) de la chaîne présentent des sections transversales en forme de T inversé, les barres transversales du T s'engageant sous des épaulements (28, 30) formés sur le rail (26).

6. Un ensemble de toit ouvrant selon la revendication 5, caractérisé en ce que les faces d'extrémité des embases des T de chacun des chaînons (44, 48, 52) sont disposées de manière à venir en butée en empêchant le mouvement correspondant vers ledit angle obtus.

7. Un ensemble de toit selon la revendication 5 ou 6, caractérisé en ce que les chaînons (44, 48, 52) de la chaîne et le patin de guidage (56) sont réalisés en une seule pièce venue de moulage intégralement avec les structures d'articulation moulées entre eux.

8. Un ensemble de toit ouvrant selon la revendication 4 ou 5, caractérisé en ce que chaque chaînon (44, 48, 52) est réalisé en une seule pièce avec un axe d'articulation moulé (100) à une extrémité et une fente (102) à l'autre extrémité, la fente 102 présentant une extrémité intérieure élargie engagée pour s'enclencher sur l'axe (100) du chaînon adjacent voisin.

9. Un ensemble de toit ouvrant selon l'une quelconque des revendications précétendes, caractérisé en ce que les moyens de guidage avant comprennent un moyen de support (74) fixé sous le panneau (20) en position adjacente à chacune des coins avant de celui-ci portant une structure (78) destinée à venir en prise avec une structure complémentaire (70) ménagée sur le rail (26) qui empêche le mouvement vers l'arrière du panneau (20) excepté lorsque lè bord arrière de celui-ci est dans sa position totalement abaissée sous le toit du véhicule (14).

FIG.1.

FIG.2.

FIG. 3.

FIG. 4.

FIG. 5.

FIG. 7.

FIG. 8.

FIG. 6.

0 106 611

FIG.9

FIG.10

FIG.11

0 106 611